# EUROPEAN PATENT SPECIFICATION

(11) **EP 3 418 042 B1**
(45) Date of publication and mention of the grant of the patent: **04.03.2026**
(21) Application number: 17305750.6
(22) Date of filing: 19.06.2017
(51) Int. Cl.: B29D 11/00, G02B 3/00, B33Y 80/00

(54) **OPTICAL PART AND METHOD OF PRODUCING AN OPTICAL PART**
OPTISCHES ELEMENT UND VERFAHREN ZUR HERSTELLUNG EINES OPTISCHEN ELEMENTS
ÉLÉMENT OPTIQUE ET SON PROCÉDÉ DE PRODUCTION

(43) Date of publication of application: 26.12.2018
(73) Proprietor: Essilor International, 94220 Charenton-le-Pont (FR)
(72) Inventor: CONTE, Dominique, 94220 Charenton-le-Pont (FR); MAITRE, Nicolas, 94220 CHARENTON LE PONT (FR); LECLAIRE, Yves, 94220 CHARENTON-LE-PONT (FR)
(74) Representative: Jacobacci Coralis Harle

(56) References cited:
- WO-A1-2016/108084
- WO-A1-2017/035509
- JP-A- 2008 200 994
- US-A- 6 078 430
- US-A1- 2003 095 344
- US-A1- 2010 068 016
- US-A1- 2011 037 945
- US-A1- 2015 061 166
- US-A1- 2015 253 585
- US-A1- 2017 050 387
- US-B1- 6 270 219
- US-B2- 7 586 695

## Description

### TECHNICAL FIELD OF THE INVENTION

The invention relates to the manufacturing of ophthalmic lenses.

More precisely the invention relates to an optical part and to a method of producing an optical part.

### BACKGROUND INFORMATION AND PRIOR ART

It has been proposed, for instance in document WO2014195653, to produce ophthalmic lenses using additive manufacturing methods.

This is interesting in that an ophthalmic lens produced by additive manufacturing may directly be designed to the shape of the frame that shall carry the ophthalmic lens, possibly with an edge having a specific section *(e.g.* participating in mounting the ophthalmic lens to the frame).

Producing an ophthalmic lens that is directly designed to the shape of the frame may however lead to issues, in particular when coatings should be deposited on the lens.

This is because use can no longer be made of the border part of the lens, which is cut out in conventional methods to obtain a lens matching the frame and which can thus advantageously be used to hold the lens throughout the deposition process and be subjected to edge effects with no consequence on the final lens.

### SUMMARY OF THE INVENTION

In this context, the invention provides an optical part comprising an ophthalmic lens produced by additive manufacturing and a holder integrally formed with the ophthalmic lens.

It is thus taken advantage of the additive manufacturing process to produce a holder integral with the ophthalmic lens, which holder can be used in further manufacturing steps to hold the ophthalmic lens, as exemplified below.

Additive manufacturing is a manufacturing technique defined in international standard ASTM 2792-12 and designates a process for assembling elements of material to obtain a solid three-dimensional object on the basis of a digital three-dimensional model (typically represented by data of a CAD file, CAS standing for *"Computer-Aided Design"*)*.*

Such a process is sometimes referred to as 3-D printing or material printing because successive elements (e.g. layers) of materials may be deposited in succession one on the precedent. The layers, which correspond to virtual cross sections extracted from the three-dimensional model, are assembled and fused in order to form the solid three-dimensional object, here an optical part comprising an ophthalmic lens and a holder.

The expression *"additive manufacturing"* especially designates processes that create solid objects by juxtaposing volume elements or voxels with a preset geometry defined by the three-dimensional model (typically in a CAD file as noted above). The term *"juxtaposing"* is understood to mean sequential operations, for example especially deposition of a layer on the precedent, or the deposition of a voxel making contact with or nearby a voxel deposited beforehand.

Moreover, the term *"voxel"* is understood to mean an individual element that, in combination with other voxels, defines an intermediate element, a layer for example. The term *"voxel"* may also apply to an intermediate element, for example a layer, in particular when stereolithography techniques are used.

Thus, depending on the additive manufacturing technique used, the ophthalmic lens will possibly be produced voxel by voxel, line by line or layer by layer.

The additive manufacturing method used may be selected in, but is not limited to, the list consisting of inkjet printing, stereolithography, mask stereolithography or mask projection stereolithography, polymer jetting, scanning laser sintering (SLS), scanning laser melting (SLM,) and fused deposition modeling (FDM).

According to possible embodiments, such as described below, the ophthalmic lens having a peripheral edge, the holder may extend from the peripheral edge.

The holder is connected to the ophthalmic lens by a frangible portion, which makes it possible to easily separate the holder and the ophthalmic lens.

At least a further ophthalmic lens may in addition be integrally formed with the holder, as in the embodiments described below. Said ophthalmic lens and said further ophthalmic lens may in this case form a pair of lenses designed for a wearer. The pair of lenses can thus be produced in parallel, while being bound by the holder, which is particularly convenient.

According to a possible embodiment, said holder may comprise a fastener for connection to a corresponding counterpart.

The optical part may also comprise an integrally formed drop extractor (or drop sink), thus avoiding the formation of varnish drops on the ophthalmic lens, as further explained below.

The drop extractor may in practice extend from the peripheral edge or from the holder.

Thanks to the use of an additive manufacturing process, the ophthalmic lens may be formed to a predefined frame shape (corresponding to a frame selected beforehand by the wearer). The produced ophthalmic lens is thus directly mountable on the frame without requiring any additional step.

According to possible embodiments, the ophthalmic lens may have a first composition while the holder may have a second composition distinct from said first composition.

Further, to ease placing of the ophthalmic lens in a machine *e.g.* during the further manufacturing steps, the holder may be flexible.

The invention also provides a method of producing an optical part comprising an ophthalmic lens by use of an additive manufacturing process as defined in claim 10.

The additive manufacturing process may then possibly include a step of forming a further ophthalmic lens integral with the holder.

As noted above, the additive manufacturing process may also include a step of forming a drop extractor integral with the optical part.

The holder may be used in particular when the ophthalmic lens is further processed by a machine comprising fixing means designed to cooperate with said holder.

Said fixing means may in practice be one of a fastener adapted to cooperate with a fastener-shaped holder and fixing means comprising a tube designed to accommodate said holder.

### DETAILED DESCRIPTION OF EXAMPLE(S)

The following description, given with regard to the appended drawings, which are given by way of nonlimiting example, will allow what the invention consists of and how it can be carried out to be understood.

In the appended drawings:
- Figure 1 schematically shows an exemplary additive manufacturing machine usable in the context of the present invention;
- Figure 2 shows a first example of an optical part produced by an additive manufacturing process;
- Figure 3 shows a second example of an optical part produced by an additive manufacturing process;
- Figure 4 shows optical parts produced by an additive manufacturing process in a third exemplary embodiment of the invention;
- Figure 5 shows a fourth example of an optical part produced by additive manufacturing;
- Figure 6 shows a fifth example of an optical part produced by additive manufacturing;
- Figure 7 shows a sixth example of an optical part produced by additive manufacturing;
- Figure 8 shows the optical part of Figure 1 mounted to fixing means of a machine;
- Figure 9 schematically shows a spin-coating system adapted to coat ophthalmic lenses previously produced integral with a holder; and
- Figure 10 shows a technique of metamode sputtering applied to an optical part according to the invention.

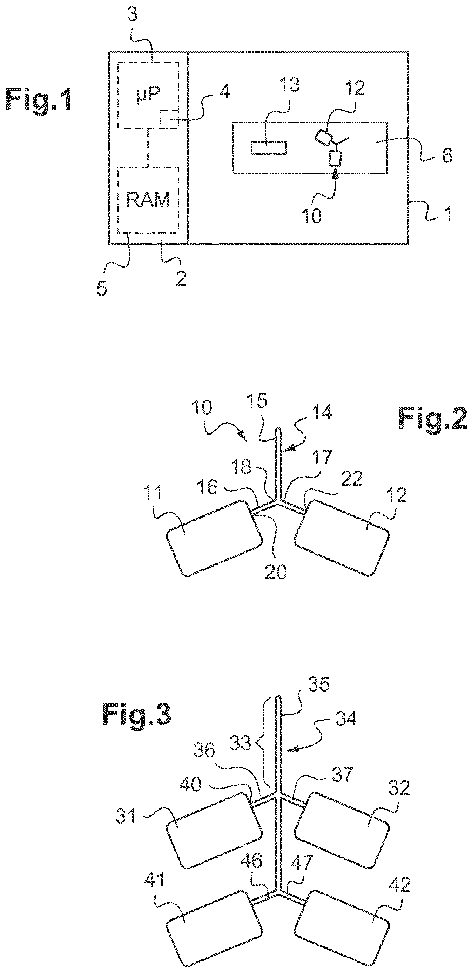

Figure 1 shows an exemplary additive manufacturing machine 1 usable in the context of the present invention.

This additive manufacturing machine 1 comprises a control unit 2, a nozzle 13 (or possibly a bank of such nozzles) and a manufacturing supporting member 12 on which an optical part 10 will be manufactured by means of an additive manufacturing process such as described below.

The additive manufacturing machine 1 also comprises an aperture 6, here covered during the manufacturing phase by a removable shield, thereby allowing the optical part 10 to be reached on the manufacturing supporting member 12 after manufacture by means of the additive manufacturing process.

The manufacturing supporting member 12 comprises a body provided with a manufacturing surface that has an overall geometry, all or some of which is independent or dependent on the geometry of at least one surface of the object to be produced by additive manufacturing. In the example described here, the manufacturing surface is flat; as a variant, it could for example be convex or concave.

The nozzle 13 (or the nozzles in the back of nozzles) is (are each) controlled by the control unit 2 so as to be moved by actuators and to deliver elementary volumes (or voxels) of a material that will form, after an optional additional treatment (such as a photo-polymerization step), elementary portions of the optical part 10.

The control unit 2 is provided with a data processing system, especially comprising a microprocessor 3 and a (*e.g.* non-volatile) memory 4 (here a read-only memory or ROM integrated into the microprocessor 3). Such a memory 4 stores computer program instructions (forming a software) which, when executed by the microprocessor 3, allows the additive manufacturing machine 1 to be controlled and thus the additive manufacturing process to be implemented, for example in order to produce one of the optical parts described below.

The control unit 2 furthermore comprises a modifiable memory 5, here a volatile random access memory (RAM), in which the data used during the execution of the software and implementation of the additive manufacturing process are stored.

As a variant, the non-volatile memory 4 and/or the modifiable memory 5 could be a rewritable non-volatile memory, for example an electrically erasable programmable read-only memory (EEPROM).

The modifiable memory 5 especially stores elements for defining the optical part 10 to be manufactured. These defining elements were for example received beforehand from another data-processing system (not shown) connected to the manufacturing machine 1 by means of a computer network.

These defining elements are for example data (typically taking the form of a file stored in the modifiable memory 5) that at least partly define the (three-dimensional) geometry of the optical part 10.

The defining elements may also include data that define the simple optical function prescribed to the ophthalmic lens included in the optical part to be manufactured, as described below. According to one possible embodiment, the defining elements may comprise personalizing parameters of the future wearer of spectacles equipped with this ophthalmic lens and/or parameters of the geometry of the frame that will bear this ophthalmic lens.

Specifically, the geometry of the ophthalmic lens included in the optical part 10 may be deduced from defining elements representing knowledge of the optical function and optionally of personalizing and/or frame parameters. The defining elements may thus include a definition of the shape of the edge of the ophthalmic lens included in the optical part 10.

The expression *"optical function* of *an ophthalmic lens"* is understood to mean the optical response of this lens, i.e. a function defining any modification of the propagation and transmission of an optical beam through the lens in question, whatever the incidence of the entering optical beam and whatever the geometric extent of the entrance dioptre illuminated by the incident optical beam.

More precisely, in the ophthalmic field, optical function is defined as the distribution of wearer power and astigmatism characteristics, of prismatic deviations and higher-order aberrations associated with the lens for all the directions of the gaze of a wearer of this lens. Of course, this assumes that the geometric position of the lens relative to the eye of the wearer is already known.

It will also be noted that wearer power is one way of calculating and adjusting the power of the ophthalmic lens, another way being to use lensmeter power. Calculation of wearer power ensures that the power perceived by the wearer (*i.e.* the power of the beam of light that enters into the eye), once the lens has been fitted in the frame and is being worn by the wearer, corresponds to the prescribed power. At the optical centre of a unifocal lens, wearer power is generally close to the power observed with a lensmeter positioned at this point.

The modifiable memory 5 (or as a variant the read-only memory 4) for example furthermore stores characteristics of materials that may be formed (*e.g.* after photo-polymerization) from materials delivered by the nozzle 13 (or the bank of nozzles). These characteristics may optionally be taken into account when the geometry of the portions to be manufactured is determined (by the microprocessor 3).

Likewise, the modifiable memory 5 (or as a variant the non-volatile memory 4) may store data defining the manufacturing area of the manufacturing supporting member 12, in particular when this surface is not flat (for example concave or convex as indicated above), and/or other data representing characteristic parameters of the additive manufacturing, for example the rate of advance of the nozzle(s) 13, the power and power source implemented in the subsequent treatment (*e.g.* the photo-polymerization), for example a source emitting in the ultraviolet (or, as a variant, a laser such as in the case of a stereolithography machine, or heating power in the case of deposition of a tensioned filament or extrusion of a thermoplastic filament).

Producing the optical part 10 by additive manufacturing may include, in addition to forming a plurality of superimposed voxels or layers, one or several step(s) of photo-polymerization. Steps of photo-polymerization may be performed when producing each voxel, or globally after delivery of material by the nozzle 13 (or the bank of nozzles), or after depositing each layer of material.

It may be furthermore noted that polymerization of the optical part 10 may be unfinished at the end of the additive manufacturing method producing optical part 10.

According to a possible embodiment, the additive manufacturing machine may include a plurality of nozzles, each nozzle delivering a particular composition or material. Use of a plurality of nozzles makes it possible to obtain a functionally graded material (FGM) having a composition gradually varying over space.

According to possible embodiments:
- the plurality of juxtaposed and superposed voxels (or volume elements) forms superposed layers that each have a thickness that is constant or variable over their length and/or all have or do not have the same thickness;
- the material is a photopolymer comprising one or more families of molecules having one or more acrylic, methacrylic, acrylate or methacrylate functions; a family of molecules having one or more epoxy, thioepoxy or thiolene functions; a family of molecules having one or more thiol, sulfide or episulfide functions; a family of molecules having one or more vinyl ether, vinyl caprolactam or vinylpyrolidone functions; a family of hyperbranched or hybrid organic/inorganic materials; or a combination of these functions; the mentioned chemical functions possibly being carried by monomers or oligomers or a combination of monomers and oligomers;
- the material may comprise at least one photoinitiator;
- the material may comprise colloidal particles or nanoparticles, in particular colloidal particles or nanoparticles having dimensions for example smaller than the visible wavelengths, such as for example:
   - nanoparticles of carbonates of alkaline-earth metals such as calcium carbonate for example;
   - nanoparticles of sulfates of alkaline-earth metals such as barium sulfate for example;
   - nanoparticles of metal oxides, such as alumina, zinc oxide, zirconium oxide or titanium dioxide for example;
   - nanoparticles of metalloid oxides, silica dioxide for example;
   - nanoparticles of metal sulfides, especially zinc sulfide;
   - siloxanes, such as the silsesquioxanes for example; and
   - nanoparticles functionalizable with polymerizable organic groups,
   incorporating such nanoparticles in a monomer especially allowing the index of the latter to be increased;
- the material may comprise, in at least certain of the preset volume elements, a pigment or dye, for example a dye belonging to the azo or rhodamine or cyanine or polymethine or merocyanine or fluorescein or pyrylium or phthalocyanine or perylene or benzanthrone or anthrapyrimidine or anthrapyridone families, or even a metal-complex dye such as a rare-earth cryptates or chelates; incorporating such materials into the initial monomer formulation especially allowing tinted lenses or even lenses with a gradient tint to be obtained;
- the manufacturing process comprises an additional thermal irradiation step and/or an additional actinic irradiation step, such as for example at ultraviolet wavelengths of the spectrum, or even no irradiation step;
- the manufacturing process may comprises a step in which the index variation of the material of the ophthalmic lens is taken into account, taking the form of an iterative optimization loop according to known optimization procedures;
- the material of the ophthalmic lens optionally comprises one or more dyes, and/or nanoparticles configured to modify its optical transmission and/or its appearance, and/or nanoparticles or additives configured to modify its mechanical properties;
- the additive manufacturing machine is not a three-dimensional printing machine but rather a stereolithography machine (or SLA for "*Stereolithograpy Apparatus*") or a thermoplastic filament extrusion machine, also called a tensioned filament deposition machine (or FDM for *"Fused Deposition Modeling"*); and
- the control unit comprises a microcontroller instead of a microprocessor.

Figure 2 shows an optical part 10 produced by an additive manufacturing process, here using the additive manufacturing machine described above with reference to Figure 1.

This optical part 10 includes a first ophthalmic lens 11, a second ophthalmic lens 12 and a holder 14 integral with both the first and second ophthalmic lenses 11, 12.

Each of said first and second ophthalmic lenses 11, 12 is schematically shown with a generally rectangular external shape, but may in practice be produced with a predefined shape (corresponding to the rim of the frame meant to carry the ophthalmic lens) thanks to the additive manufacturing process. This remark also applies to other embodiments described below.

In the present embodiment, the holder 14 includes a rod 15, a first arm 16 connected to the first ophthalmic lens 11 and a second arm 17 connected to the second ophthalmic lens 12.

The rod 15, the first arm 16 and the second arm 17 are connected together at a central portion 18.

The first arm 16 is here connected to the first ophthalmic lens 11 (*e.g.* to the peripheral edge of the first ophthalmic lens 11) via a frangible portion 20. In a corresponding manner, the second arm 17 is connected to the second ophthalmic lens 12 *(e.g.* to the peripheral edge of the second ophthalmic lens 12) via a frangible portion 22.

Thanks to the use of the additive manufacturing process, the shape and/or the material forming each frangible portion 20, 22 may be chosen so as to enable easy separation of the holder 14 from the first and second ophthalmic lenses 11, 12 once production of these ophthalmic lenses 11, 12 is completed. Each frangible portion 20, 21 is made of a functionally graded material (as produced by an additive manufacturing machine as mentioned above).

In a similar manner, using an additive manufacturing machine adapted to produce an optical part 10 made of several distinct compositions, the first and second ophthalmic lenses 11, 12 may in some embodiments have a first composition that is distinct from a second composition used to produce the holder 14. In such a case, the first composition may be chosen as particularly adapted for optically active elements (*e.g.* for its transparency and refraction index), while the second composition may then be chosen for its mechanical properties.

The word *"composition"* is used here to mean a material or a specific combination of materials.

In this respect, the second composition may be chosen such that the holder 14 is flexible (or partly flexible, for instance only the first arm 16 and/or the second arm 17 are flexible). Such flexibility allows displacements between the various elements of the optical part 10 (*e.g.* between the rod 15, the first ophthalmic lens 11 and the second ophthalmic lens 12), which may ease placement of the optical part 10 in post-processing machines, as described below.

Thanks to the additive manufacturing process, each of the first and second ophthalmic lenses 11, 12 may on the other hand be formed to produce the desired optical effect (defined depending on the wearer's correction sought, and possible on the geometrical characteristics of the frame meant to carry the ophthalmic lens, as discussed above in connection with Figure 1).

According to a possible embodiment, the first and second ophthalmic lenses 11, 12 form a pair of lenses designed for a particular wearer: the first ophthalmic lens 11 is for instance designed to provide an appropriate correction for the wearer's left eye and the second ophthalmic lens 12 is then designed to provide an appropriate correction for the wearer's right eye.

Providing such an assembly where ophthalmic lenses forming a pair are connected by a holder greatly simplifies management of the pair during the manufacturing process.

In addition, whether or not ophthalmic lenses carried by the holder 14 form a pair designed for a specific wearer, the holder 14 may include a marking (formed on the surface of the holder) representing for instance a serial number, a reference, a product name, a client name, *etc.*

Figure 3 shows another optical part produced by an additive manufacturing process, *e.g.* using the additive manufacturing machine of Figure 1.

As visible on Figure 3, a plurality of ophthalmic lenses (here four such ophthalmic lenses 31, 32, 41, 42) are held together by being connected to a common rod 35, thus forming a cluster of ophthalmic lenses 31, 32, 41, 42.

Precisely, each ophthalmic lens 31, 32, 41, 42 is connected to the rod 35 via a corresponding arm 36, 37, 46, 47. Said differently, an arm 36, 37, 46, 47 is interposed between each ophthalmic lens 31, 32, 41, 42 and the rod 35.

The rod 35 and the (here four) arms 36, 37, 46, 47 are integrally formed with the ophthalmic lenses 31, 32, 41, 42 by the additive manufacturing process and thus form a holder 34 for the various ophthalmic lenses 31, 32, 41, 42.

As visible on Figure 3, the rod 35 includes a bare portion 33 which extends between a free end of the rod 35 and the closest arm 36, 37 relative to the free end.

As mentioned above in connection with Figure 2, each arm 36, 37, 46, 47 may be connected to the corresponding ophthalmic lens 31, 32, 41, 42 (here to the peripheral edge of the corresponding ophthalmic lens 31, 32, 41, 42) via a frangible portion 40 to facilitate later separation of each ophthalmic lens 31, 32, 41, 42 from the holder 34. The frangible portion 40 may be designed (as regards its shape and its composition) in this goal and easily produced by the additive manufacturing process with its designed shape and composition. The frangible portion 40 may for instance be made of a functionally graded material (as may be produced by an additive manufacturing machine as mentioned above).

Thanks to the additive manufacturing process (using a machine possibly delivering several compositions as explained above), the ophthalmic lenses 31, 32, 41, 42 may in some embodiments have a first composition and the holder 32 may then have a second composition that is distinct from the first composition. As noted above, the first composition may be chosen as particularly adapted for optically active elements (*e.g.* for its transparency and refraction index), while the second composition may then be chosen for its mechanical properties.

In this respect, the second composition may be chosen such that the holder 34 is (at least partly) flexible, in order to allow for instance displacements between the various elements of the optical part to ease placement of the optical part in post-processing machines.

Each ophthalmic lens 31, 32, 41, 42 is produced (by the additive manufacturing process) with a shape generating the desired optical effect (defined depending on the wearer's correction sought, and possible on the geometrical characteristics of the frame meant to carry the ophthalmic lens, as discussed above in connection with Figure 1).

In the embodiment shown in Figure 3, ophthalmic lenses 31, 32, 41, 42 are grouped in pairs and the ophthalmic lenses 31, 32 (or 41, 42) of a given pair are connected (each via a corresponding arm) to the rod 35 at the same level along its length.

Ophthalmic lenses 31, 32 (or 41, 42) of a given pair correspond to a specific order (or job) and are for instance meant to be mounted in the same frame (one of the ophthalmic lens 31 being designed for correction of the left eye of the wearer of the frame, the other one 32 being designed for correction of the right eye of the wearer).

By providing both ophthalmic lenses 31, 32 (or 41, 42) of a pair at the same level along the holder 34, both ophthalmic lenses 31, 32 (or 41, 42) undergo a similar treatment during post-processing steps (as described below), which avoids disparities between ophthalmic lenses delivered to the wearer.

According to a possible variation, ophthalmic lenses may not be aligned with a corresponding ophthalmic lens, but interspersed on both sides of the rod 35.

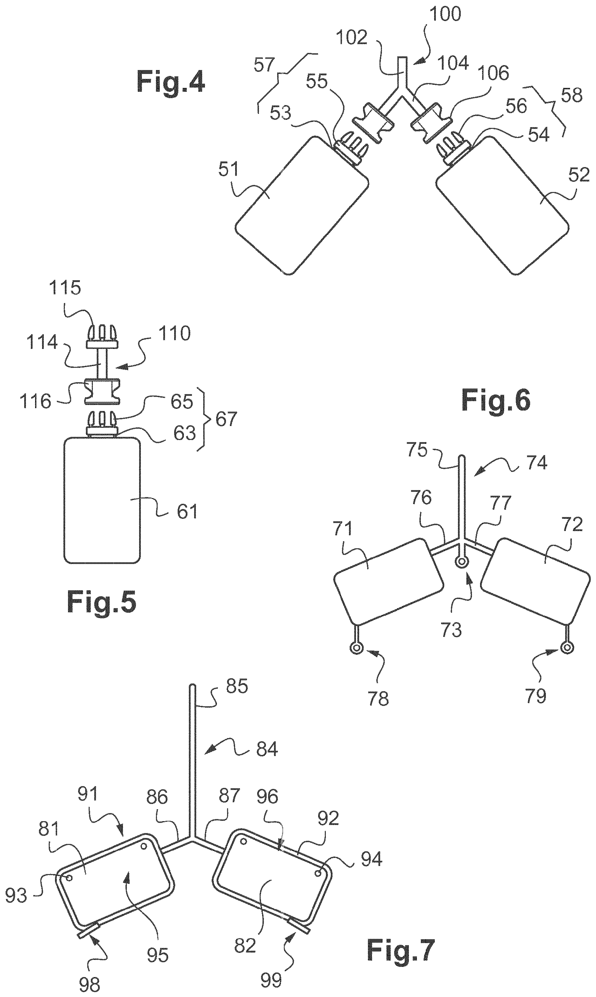

Figures 4 and 5 show further embodiments of optical parts produced by additive manufacturing according to the invention.

According to these embodiments, the optical part comprises an ophthalmic lens 51, 52, 61 (here a single ophthalmic lens) and a holder 57, 58, 67 integrally formed with the ophthalmic lens 51, 52, 61 and including a fastener 55, 56, 65. The ophthalmic lens 51, 52, 61 and the holder 57, 58, 67 are produced by an additive manufacturing process, for instance using the additive manufacturing machine of Figure 1.

The holder 57, 58, 67 also includes here a frangible portion 53, 54, 63 connecting the ophthalmic lens 51, 52, 61 (e.g. at a portion of the peripheral edge of the ophthalmic lens 51, 52, 61) to the fastener 55, 56, 65. Such a frangible portion 53, 54, 63 makes it easy to separate the holder 57, 58, 67 from the ophthalmic lens 51, 52, 61 once finished.

The fastener 55, 56, 65 is adapted for coupling to a counterpart fastener 106, 116 provided on a connector 100, 110. In the embodiment described here, the fastener 55, 56, 65 of the optical part is a male fastener, the counterpart fastener 106, 116 being a female fastener. The fastener 55, 56, 65 comprises for instance at least one flexible finger for snap-fit engagement with the counterpart fastener 106, 116.

In the embodiment of Figure 4, the connector 100 includes a rod 102 and a plurality of arms 104 extending between a corresponding (here female) fastener 106 and the rod 102. A plurality of optical parts including an ophthalmic lens 51, 52 can thus be attached to the connector 100. The corresponding ophthalmic lenses 51, 52 can thus be held throughout post-processing steps by mounting the connector 100 on appropriate tools, as further described below.

In the embodiment of Figure 5, the connector 110 includes an intermediate portion 114 (having here the shape of a rod) connecting the above-mentioned fastener 116 (adapted for coupling with the fastener 65 of the optical part) and a further fastener 115.

The use of an optical part (including at least an ophthalmic lens 51, 52, 61) that includes a fastener 55, 56, 65 and is therefore detachably coupled to a connector 100, 110 makes it possible to adapt to different machines that may be used for post-processing the ophthalmic lenses 51, 52, 61, as described below.

For instance, the connector 100, 110 may be used to dip the ophthalmic lenses 51, 52, 61 in a varnish bath (as further explained below), whereas the fastener 55, 56, 65 could be directly coupled to a tool or a machine (i.e. without using the connector 100, 110), for instance to mount the ophthalmic lens (centred) on the support of a spinning machine for spin-coating.

Figure 6 shows another embodiment of an optical part according to the invention.

As in the embodiment shown in Figure 2, the optical part of Figure 6 includes a first ophthalmic lens 71, a second ophthalmic lens 72 and a holder 74 integral with both the first and second ophthalmic lenses 71, 72. This optical part is produced by additive manufacturing.

The holder 74 includes a rod 75, a first arm 76 connected to the first ophthalmic lens 71 and a second arm 77 connected to the second ophthalmic lens 72. The first arm 76 is here connected to a peripheral flange of the first ophthalmic lens 71, possibly via a frangible portion as explained above. In a similar manner, the second arm 77 is here connected to a peripheral flange of the second ophthalmic lens 72, possibly via a frangible portion.

As in the embodiment of Figure 2, the rod 75, the first arm 76 and the second arm 77 are connected together at central portion.

In the present embodiment, the optical part also includes at least one drop extractor (or drop sink) 73, 78, 79 adapted to receive and/or to attract liquids (in particular a varnish to be deposited on the optical part) so as to avoid the formation of drops on the ophthalmic lenses 71, 72.

The drop extractor 73, 78, 79 may extend from one of the ophthalmic lenses 71, 72 (e.g. from a peripheral edge of ophthalmic lenses 71, 72) or from the holder 74 (here from the central portion of the holder 74). As shown in Figure 6, a drop extractor 78, 79 may extend from each of the ophthalmic lenses 71, 72.

As visible in Figure 6, the drop extractor 73, 78, 79 comprises a rod-like element extending from the ophthalmic lens 71, 72 or the holder 74, and a ringshaped element forming the free end of the drop extractor 73, 78, 79.

Each drop extractor 73, 78, 79 is formed by the additive manufacturing process used to produce the optical part as mentioned above.

Drops extractors 73, 78, 79 are for instance formed in a wetting (or hydrophilic) material.

Drop extractors 78, 79 extending from an ophthalmic lens 71,72 may be connected to concerned ophthalmic lens 71, 72 via a frangible portion.

Thanks to the use of the additive manufacturing process, the shape and/or the material forming each such frangible portion may be chosen so as to enable easy separation of drop extractor 78, 79 from the concerned ophthalmic lens 71, 72 once production of this ophthalmic lens 71, 72 is completed.

Figure 7 shows yet another embodiment of an optical part according to the invention.

As in the embodiment of Figures 2 and 6, the optical part of Figure 7 includes a first ophthalmic lens 81, a second ophthalmic lens 82 and a holder 84 integral with both the first and second ophthalmic lenses 81, 82. This optical part is produced by additive manufacturing.

The holder 84 includes a rod 85, a first arm 86 connected to the first ophthalmic lens 81 (here to a peripheral edge 91 of the first ophthalmic lens 81) and a second arm 87 connected to the second ophthalmic lens 82 (here to the peripheral edge 92 of the second ophthalmic lens 82).

In the present embodiment, the peripheral edge 91, 92 of at least one of the ophthalmic lenses 81, 82 is formed in a material having a composition distinct from the composition of the inner (optically active) part of the concerned ophthalmic lens 81, 82.

The peripheral edge 91, 92 may be formed during the additive manufacturing process used for producing the optical part.

In a first possible implementation, the material forming the peripheral edge 91, 92 may be soluble, strippable or breakable.

In this case, holes 93, 94 possibly formed in the ophthalmic lens 81, 82 may be filled with this material. A layer made in this material may also be formed to cover a logotype 95, 96 present at the surface of the inner part of the ophthalmic lens 81, 82.

Drops or inhomogeneities formed on the peripheral edge 91, 92 during post-processing steps would then be removed by separating the peripheral edge 91, 92 from the inner part of the ophthalmic lens 81, 82 (or by dissolving the peripheral edge 91, 92) to obtain the finished product.

A tongue 98, 99 may extend from the peripheral edge 91, 92 to ease prehension and separation of the peripheral edge 91, 92 from the inner part of the ophthalmic lens 81, 82. Such a tongue 98, 99 may also form a drop extractor, as explained above with reference to Figure 6.

In a second possible implementation, the peripheral edge 91, 92 is meant to be kept in the finished product (ophthalmic lens).

The material forming the peripheral edge 91, 92 may in this case also be used to form markings on the inner part of the ophthalmic lens 81, 82, *e.g.* to form a logotype.

The material forming the peripheral edge 91, 92 may be a dewetting material or a non-stick material, such as polytetrafluorethylene (or another fluorinated material), silicone, paraffin, to avoid the formation of drops of liquids (such as a varnish) used during post-processing steps.

The material forming the peripheral edge 91, 92 may be coloured (for instance to match the colour of the frame on which the ophthalmic lens 81, 82 is to be mounted) and/or anti-reflective and/or diffusing and/or absorbing, which makes it possible to suppress undesirable stray light produced at the peripheral edge.

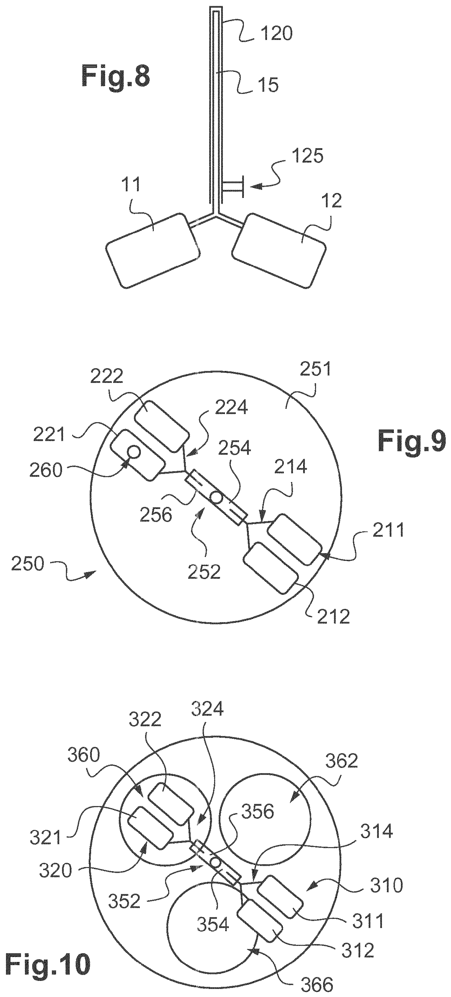

Figure 8 shows the optical part of Figure 1 mounted to fixing means 120, 125 of a machine.

As visible in Figure 8, the rod 15 of the optical part 10 is received in an elongated tube 120 of said fixing means. The fixing means also comprises a tightening screw 125 adapted to block the rod 15 in the elongated tube 120.

Although the mounting of the optical part 10 to fixing means is shown here in the case of the optical part of Figure 2, a similar mounting may be used whatever the number of ophthalmic lenses carried by the holder; this type of mounting also applies to the example of Figure 3, in particular.

The optical part 10 comprising ophthalmic lenses 11, 12 can thus be easily affixed to a tool or machine for processing or treatment of the optical part 10 (in particular of the ophthalmic lenses 11, 12 of this optical part 10).

This processing may include for instance a step of varnishing the ophthalmic lenses 11, 12 *(e.g.* to form a hard coat on the surface of these ophthalmic lenses 11, 12) and/or a step of depositing a film on the ophthalmic lenses 11, 12 *(e.g.* to form a top coat and/or an antireflective coating on the surface of these ophthalmic lenses 11, 12). This processing may also include a polymerization step and/or a lamination step and/or a final check of the obtained ophthalmic lenses 11, 12.

According to a first possibility, the varnishing step may be performed by dipping the ophthalmic lenses 11, 12 in a varnish bath. A tool carrying the tube 120 may then be moved towards the varnish bath until the ophthalmic lenses 11, 12 are immersed.

Use of drop extractors, as described above with reference to Figure 6, is particularly interesting in this case.

It is also possible, after the ophthalmic lenses 11, 12 are taken out of the varnish bath, to rotate the tool carrying the tube 120 to remove possible varnish drops forming on the ophthalmic lenses 11, 12 (in particular in parts where no drop extractor can be provided, *e.g.* in holes formed in the ophthalmic lenses).

According to a second possibility, the varnish may be deposited by spin-coating.

Figure 9 schematically shows a spin-coating system 250 adapted to coat ophthalmic lenses 211, 212, 221, 222 previously produced integral with a holder 214, 224, as provided by the invention.

The spin-coating system 250 includes a rotating plate 251 and fixing means 252 for fixing at least one cluster of ophthalmic lenses 211, 212, 221, 222.

Each ophthalmic lens 211, 212, 221, 222 is formed integral with a holder 214, 224 (and here with another ophthalmic lens 212, 211, 222, 221) by additive manufacturing.

In the present embodiment, the fixing means 252 includes a pair of diametrically opposed tubes 254, 256, each extending from the centre of the rotating plate 251 (which centre lies on the axis of rotation of the rotating plate 251).

A holder 224, 214 is mounted in each tube 254, 256 such that each ophthalmic lens 211, 212, 221, 222 is positioned in a peripheral region of the rotating plate 251.

The spin-coating system 250 also includes a nozzle 260 for delivering varnish. As visible in Figure 9, this nozzle 260 is thus arranged off-centre relative to the rotating plate 251 to spray varnish on the ophthalmic lenses 211, 212, 221, 222.

Coating by any of the methods just mentioned makes it possible to improve the impact strength of the subsequent layers in the final product. In addition, it makes it possible to ensure good adhesion of the abrasion-resistant coating to the substrate (here ophthalmic lenses). The varnish or primer compositions are based on polyurethane latex. A method for applying the primer onto the substrate is given for instance in Example 1 of US-5,316,791.

The abrasion-resistant coating, as is indicated by its name, has the role of protecting the ophthalmic lens from scratches and abrasion. Specific examples of mixtures used to prepare the abrasion-resistant coating may be found in US 2005/0123771. The abrasion-resistant coating can be any layer conventionally used as abrasion-resistant coating in the field of ophthalmic lenses. Hard abrasion-resistant and/or scratch-resistant coatings are preferably prepared from compositions comprising at least one alkoxysilane and/or one hydrolyzate of the latter obtained, for example, by hydrolysis with a hydrochloric acid solution. After the hydrolysis stage, the duration of which is generally between 2 h and 24 h, preferably between 2 h and 6 h, catalysts can optionally be added. A surface-active compound is preferably also added in order to promote the optical quality of the deposit.

Mention may be made, among the coatings that may be used here, of coatings based on epoxysilane hydrolyzates, such as those described in the patents EP 0 614 957, US 4 211 823 and US 5 015 523. A preferred composition for an abrasion-resistant coating is that disclosed in the patent FR 2 702 486 on behalf of the applicant. It comprises an epoxytrialkoxysilane and dialkyldialkoxysilane hydrolyzate, colloidal silica and a catalytic amount of aluminum-based curing catalyst, such as aluminum acetylacetonate, the remainder being essentially composed of solvents conventionally used for the formulation of such compositions. Preferentially, the hydrolyzate used is a γ-glycidoxypropyltrimethoxysilane (GLYMO) and dimethyldiethoxysilane (DMDES) hydrolyzate or else a γ- glycidoxypropyltrimethoxysilane (GLYMO) and triethyl orthosilicate (TEOS) hydrolyzate.

The abrasion-resistant coating composition can be deposited on the free surface of the primer coating by any appropriate technique, for example by dipping, centrifuging (spin-coating as described above), spraying, sprinkling or application with a brush or roller, preferably by dipping or centrifuging (spin-coating) as explained above. It is subsequently cured by the appropriate route (preferably thermal or UV radiation).

As noted above, the processing of optical parts including at least an ophthalmic lens may also include a step of depositing a film (or several films) on the ophthalmic lens, for instance by sputtering.

By mounting the optical part 10 (which includes an ophthalmic lens 11, 12) on a tool having fixing means *(e.g.* including the tube 120) such as shown in Figure 8, it is possible to flip over the optical part 10 (by rotating the tool) after a deposition phase aiming at a face of the ophthalmic lens 11, 12 so as to proceed to a further deposition phase aiming at the opposite face of the ophthalmic lens 11, 12.

When a plurality of films are to be deposited on each face of the concerned ophthalmic lens, the optical part 10 may be flipped over (by rotating the tool) between deposition on a first face and deposition on the second face (opposite the first face), and possibly also after deposition on the second face (in order to then proceed to deposition of a further film of another type on the first face).

Films to be deposited are for instance an antireflective film and/or an anti-fog film and/or a top coating (or finishing film).

Figure 10 shows a technique of metamode sputtering applied to optical parts 310, 320 according to the invention.

Each of these optical parts 310, 320 is produced by additive manufacturing and includes a pair of ophthalmic lenses 311, 312, 321, 322 integrally formed with a holder 314, 324.

Each optical part 310, 320 is mounted on a rotating tool 352 by fixing means, comprising here a tube 354, 356 adapted to receive and be coupled to the holder 314, 324 of a corresponding optical part 310, 320.

By rotating the rotating tool 352, ophthalmic lenses 311, 312, 321, 322 of a pair may be positioned facing a first target 360 (*e.g.* a low index or metallic target, such as a target made of SiO₂ or Si), or facing a second target 362 (e.g. a high index or metallic target, such as a target made of ZrO₂ or Zr), or facing a plasma electrode (for surface treatment or oxidation, for instance).

It may be recalled here that sputtering includes bombarding a target (here the first target and/or second target) with particles so as to deposit a film of material of the target, here on an ophthalmic lens 311, 312, 321, 322.

## Claims

1. Optical part produced by additive manufacturing, **characterized in that** the optical part (10; 310; 320) comprises an ophthalmic lens (11; 12; 31; 32; 41; 42; 51; 52; 61; 71; 72; 81; 82; 211; 212; 221; 222; 311; 312; 321; 322) and a holder (14; 34; 57; 58; 67; 74; 84; 214 224; 314; 324) integrally formed with the ophthalmic lens, wherein the holder is connected to the ophthalmic lens by a frangible portion (20; 40; 53; 54; 63) made of a functionally graded material.

2. Optical part according to claim 1, wherein the ophthalmic lens has a peripheral edge and wherein the holder extends from the peripheral edge.

3. Optical part according to any of claims 1-2, wherein at least a further ophthalmic lens is integrally formed with the holder.

4. Optical part according to any of claims 1-3, wherein said holder comprises a fastener (55; 56; 65).

5. Optical part according to any of claims 1-4, comprising an integrally formed drop extractor (73; 78; 79; 98; 99).

6. Optical part according to claim 5 taken in the dependency of claim 2, wherein said drop extractor extends from the peripheral edge.

7. Optical part according to any of claims 1-6, wherein said ophthalmic lens is formed to a predefined frame shape.

8. Optical part according to any of claims 1-7, wherein the ophthalmic lens has a first composition and wherein the holder has a second composition distinct from said first composition.

9. Optical part according to any of claims 1-8, wherein the holder is flexible.

10. Method of producing an optical part (10; 310; 320) comprising an ophthalmic lens (11; 12; 31; 32; 41; 42; 51; 52; 61; 71; 72; 81; 82; 211; 212; 221; 222; 311; 312; 321; 322) by use of an additive manufacturing process, **characterised in that** the additive manufacturing process includes a step of forming a holder (14; 34; 57; 58; 67; 74; 84; 214; 224; 314; 324) integral with the ophthalmic lens, wherein the holder is connected to the ophthalmic lens by a frangible portion (20; 40; 53; 54; 63) made of a functionally graded material.

11. Method according to claim 10, wherein the additive manufacturing process includes a step of forming a further ophthalmic lens integral with the holder.

12. Method according to claim 10 or 11, wherein the additive manufacturing process includes a step of forming a drop extractor (73; 78; 79; 98; 99) integral with the optical part.

13. Method according to any of claims 10-12, wherein the ophthalmic lens is further processed by a machine comprising fixing means (352) designed to cooperate with said holder.

14. Method according to claim 13, wherein said fixing means (352) being one of a fastener adapted to cooperate with a fastener-shaped holder and fixing means comprising a tube (120; 254; 256; 354; 356) designed to accommodate said holder.

## Patentansprüche

1. Optisches Teil, das durch additive Fertigung hergestellt ist, **dadurch gekennzeichnet, dass** das optische Teil (10; 310; 320) eine ophthalmische Linse ((11; 12; 31; 32; 41; 42; 51; 52; 61; 71; 72; 81; 82; 211; 212; 221; 222; 311; 312; 321; 322) und einen integral mit der ophthalmischen Linse ausgebildeten Halter (14; 34; 57; 58; 67; 74; 84; 214; 224; 314; 324) umfasst, wobei der Halter durch einen aus einem funktional gradierten Material bestehenden, zerbrechlichen Abschnitt (20; 40; 53; 54; 63) mit der ophthalmischen Linse verbunden ist.

2. Optisches Teil nach Anspruch 1, wobei die ophthalmische Linse eine Umfangskante aufweist und wobei sich der Halter von der Umfangskante erstreckt.

3. Optisches Teil nach einem der Ansprüche 1-2, wobei mindestens eine weitere ophthalmische Linse integral mit dem Halter ausgebildet ist.

4. Optisches Teil nach einem der Ansprüche 1-3, wobei der Halter ein Befestigungselement (55; 56; 65) umfasst.

5. Optisches Teil nach einem der Ansprüche 1-4, umfassend einen integral ausgebildeten Tropfenextraktor (73; 78; 79; 98; 99).

6. Optisches Teil nach Anspruch 5 in Abhängigkeit von Anspruch 2, wobei sich der Tropfenextraktor von der Umfangskante erstreckt.

7. Optisches Teil nach einem der Ansprüche 1-6, wobei die ophthalmische Linse in einer vordefinierten Rahmenform ausgebildet ist.

8. Optisches Teil nach einem der Ansprüche 1-7, wobei die ophthalmische Linse eine erste Zusammensetzung aufweist und wobei der Halter eine zweite Zusammensetzung aufweist, die sich von der ersten Zusammensetzung unterscheidet.

9. Optisches Teil nach einem der Ansprüche 1-8, wobei der Halter flexibel ist.

10. Verfahren zum Herstellen eines optischen Teils (10; 310; 320), das eine ophthalmische Linse (11; 12; 31; 32; 41; 42; 51; 52; 61; 71; 72; 81; 82; 211; 212; 221; 222; 311; 312; 321; 322) umfasst, unter Verwendung eines additiven Fertigungsprozesses, **dadurch gekennzeichnet, dass** der additive Fertigungsprozess einen Schritt zum Ausbilden eines Halters (14; 34; 57; 58; 67; 74; 84; 214; 224; 314; 324) integral mit der ophthalmischen Linse umfasst, wobei der Halter durch einen aus einem funktional gradierten Material bestehenden, zerbrechlichen Abschnitt (20; 40; 53; 54; 63) mit der ophthalmischen Linse verbunden ist.

11. Verfahren nach Anspruch 10, wobei der additive Fertigungsprozess einen Schritt zum Ausbilden einer weiteren ophthalmischen Linse integral mit dem Halter umfasst.

12. Verfahren nach Anspruch 10 oder 11, wobei der additive Fertigungsprozess einen Schritt zum Ausbilden eines Tropfenextraktors (73; 78; 79; 98; 99) integral mit dem optischen Teil umfasst.

13. Verfahren nach einem der Ansprüche 10-12, wobei die ophthalmische Linse durch eine Maschine weiter verarbeitet wird, die Fixiermittel (352) umfasst, die dazu ausgestaltet sind, mit dem Halter zusammenzuwirken.

14. Verfahren nach Anspruch 13, wobei die Fixiermittel (352) eines von einem Befestigungselement, das dazu ausgelegt ist, mit einem befestigungselementförmigen Halter zusammenzuwirken, und Fixiermitteln, die ein Rohr (120; 254; 256; 354; 356) umfassen, das dazu ausgestaltet ist, den Halter aufzunehmen, sind.

## Revendications

1. Pièce optique produite par fabrication additive, **caractérisée en ce que** la pièce optique (10 ; 310 ; 320) comprend une lentille ophtalmique (11 ; 12 ; 31 ; 32 ; 41 ; 42 ; 51 ; 52 ; 61 ; 71 ; 72 ; 81 ; 82 ; 211 ; 212 ; 221 ; 222 ; 311 ; 312 ; 321 ; 322) et un support (14 ; 34 ; 57 ; 58 ; 67 ; 74 ; 84 ; 214 ; 224 ; 314 ; 324) formé d'un seul tenant avec la lentille ophtalmique, dans laquelle le support est relié à la lentille ophtalmique par une partie friable (20 ; 40 ; 53 ; 54 ; 63) constituée d'un matériau à gradient de propriétés fonctionnelles.

2. Pièce optique selon la revendication 1, dans laquelle la lentille ophtalmique a un bord périphérique et dans laquelle le support s'étend à partir du bord périphérique.

3. Pièce optique selon l'une quelconque des revendications 1 et 2, dans laquelle au moins une autre lentille ophtalmique est formée d'un seul tenant avec le support.

4. Pièce optique selon l'une quelconque des revendications 1 à 3, dans laquelle ledit support comprend un élément de fixation (55 ; 56 ; 65).

5. Pièce optique selon l'une quelconque des revendications 1 à 4, comprenant un extracteur de gouttes (73 ; 78 ; 79 ; 98 ; 99) formé d'un seul tenant.

6. Pièce optique selon la revendication 5 lorsqu'elle dépend de la revendication 2, dans laquelle ledit extracteur de gouttes s'étend à partir du bord périphérique.

7. Pièce optique selon l'une quelconque des revendications 1 à 6, dans laquelle ladite lentille ophtalmique est formée selon une forme de monture prédéfinie.

8. Pièce optique selon l'une quelconque des revendications 1 à 7, dans laquelle la lentille ophtalmique a une première composition et dans laquelle le support a une seconde composition distincte de ladite première composition.

9. Pièce optique selon l'une quelconque des revendications 1 à 8, dans laquelle le support est flexible.

10. Procédé de production d'une pièce optique (10 ; 310 ; 320) comprenant une lentille ophtalmique (11 ; 12 ; 31 ; 32 ; 41 ; 42 ; 51 ; 52 ; 61 ; 71 ; 72 ; 81 ; 82 ; 211 ; 212 ; 221 ; 222 ; 311 ; 312 ; 321 ; 322) au moyen d'un procédé de fabrication additive, **caractérisé en ce que** le procédé de fabrication additive inclut une étape de formage d'un support (14 ; 34 ; 57 ; 58 ; 67 ; 74 ; 84 ; 214 ; 224 ; 314 ; 324) solidaire de la lentille ophtalmique, dans lequel le support est relié à la lentille ophtalmique par une partie friable (20 ; 40 ; 53 ; 54 ; 63) constituée d'un matériau à gradient de propriétés fonctionnelles.

11. Procédé selon la revendication 10, dans lequel le procédé de fabrication additive inclut une étape de formage d'une autre lentille ophtalmique solidaire du support.

12. Procédé selon la revendication 10 ou 11, dans lequel le procédé de fabrication additive inclut une étape de formage d'un extracteur de gouttes (73 ; 78 ; 79 ; 98 ; 99) solidaire de la pièce optique.

13. Procédé selon l'une quelconque des revendications 10 à 12, dans lequel la lentille ophtalmique est en outre traitée par une machine comprenant un moyen de fixation (352) conçu pour coopérer avec ledit support.

14. Procédé selon la revendication 13, dans lequel ledit moyen de fixation (352) est l'un d'un élément de fixation adapté pour coopérer avec un support en forme d'élément de fixation et d'un moyen de fixation comprenant un tube (120 ; 254 ; 256 ; 354 ; 356) conçu pour recevoir ledit support.
